# EUROPEAN PATENT APPLICATION

(11) **EP 0 633 005 A2**
(43) Date of publication of application: **11.01.1995**
(21) Application number: 94500121.2
(22) Date of filing: 08.07.1994
(51) Int. Cl.: A61C 7/12

(54) **Monobloc dental fastener**

(30) Priority: 08.07.1993 ES 9301900 U
(71) Applicant: Cervera Duran, Alberto Julio, E-28023 Aravaca, Madrid (ES)
(72) Inventor: Cervera Duran, Alberto Julio, E-28023 Aravaca, Madrid (ES)
(74) Representative: Garcia Cabrerizo, Francisco

(57) **Abstract**

This invention refers to a monobloc dental fastener formed by two elements, one called the "base" (1) and the other one called the "body" (2) conceived to be fixed to the dental vestibular surface to correct dental malpositions; both parts, the "base" and the "body", are formed by a single piece of stainless, biocompatible material. The base incorporates a series of cavities (3) to receive a liquid product that when it gets solidified constitutes the dental cement. It has the peculiarity that this base presents two bendings determining the relevant radii interpolated towards the bending direction of the body for its adaptation the face of the tooth.

## Description

This invention refers to a monobloc dental fastener conceived to correct dental malpositions and which is fixed to the dental vestibular surface.

Currently, dental fasteners used for the above-mentioned purposes are formed by two independent elements which have to be clamped or fixed to each other when applied to the patient's denture. These elements are commonly called "base" and "body". The fixing of these two elements is achieved by means of welding. This technique, which is based in the use of two pieces, presents a series of problems and inconveniences, among which the following ones should be mentioned.

The base is not designed taking into account all the specifications needed for its perfect adaptation to the tooth (two perpendicular curvatures towards the vestibular side of the tooth).

There is also a series of positioning defects of the base itself to the body, which are mainly due to imperfections arisen during the welding process itself.

It should also be noted, as one of the major problems, the need to insert an intermediate element during the process of joining the above mentioned elements, with the peculiarity that such element is not stainless. Since the fastener has to remain inside the patient's mouth for a period ranging between one and three years, this could lead to biocompatibility problems.

The fastener which is the object of this invention has been conceived to solve such problems satisfactorily, considering the following novelties it implements:
- The fastener has been manufactured as a monobloc item, using a stainless, biocompatible metallic material.
- The joint between the tooth and the fastener is achieved by means of a mechanical fixing system, based on a composite made on the item or monobloc element itself.
- The item which constitutes the base includes a series of cavities where the liquid fixing material is poured, so that when it gets solidified, the tooth is mechanically fixed to the body or fastener.
- The base is made following a geometry adapted to the face of the tooth, by means of two radii interpolated towards the bending direction of the part defining the so-called body of the fastener.

In an effort to better understand the main characteristics of the invention, herebelow is presented a detailed description based on a set of drawings attached to this descriptive report forming an integral part of it and where, as an illustration and without limitation, the following has been represented:

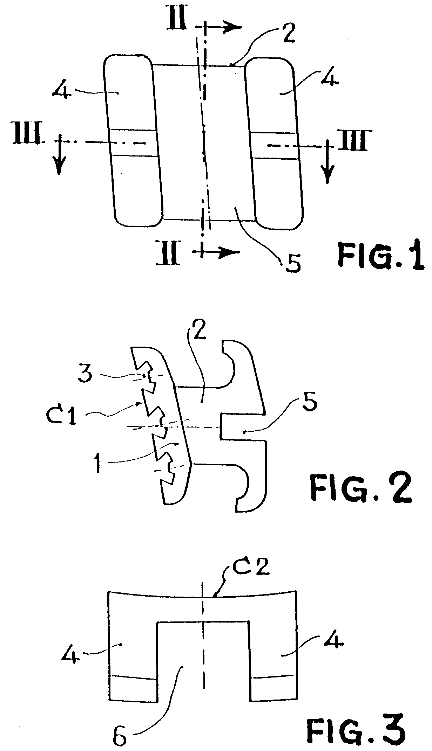

Figure 1 shows a front view of the dental fastener.

Figure 2 shows a side view of such fastener, following section II-II of figure 1.

Figure 3 shows a top view following section III-III of figure 1.

The numbers included in the figures correspond to the following items:
- 1.: Base
- 2.: Body
- 3.: Cavities of the base (1)
- 4.: Body flanges (2)
- 5.: Body slots (1)
- 6.: Space between flanges (4)
- C1.: Base bending (1)
- C2.: Base bending (1)

As it can be seen in the above mentioned figures, the dental fastener which is the object of the invention is formed by a monobloc piece with two elements, one which forms the base (1) and another one which forms the body (2). The base presents a series of cavities to mechanically fix the dental cement which the body (2) incorporates a pair of flanges (4) incorporating a cross-sectional horizontal slot (5) corresponding to the middle part of its ends. Such body (2) can present a space (6) between such flanges (4) or not.

The horizontal slots (5) - that due to the fact that they are aligned can be considered as a single slot - constitute the reference point to position the tooth by introducing different kinds of wires acting on the fastener itself and this, in turn, on the tooth itself. The final dental position is determined by the angle formed by the base (1) and the slot (5).

The base (1) presents two bendings following the slope of the body (2) of the piece or fastener which correspond to the above-mentioned bendings C1 and C2.

## Claims

1. A monobloc dental fastener formed by two elements, one called the "base" and the other one called the "body" conceived to be fixed to the dental vestibular surface to correct dental malpositions essentially characterized because both parts, the "base" and the "body", are formed by a single piece of stainless, biocompatible material. The base incorporates a series of cavities to receive a liquid product that when it gets solidified constitutes the dental cement. It has the peculiarity that this base presents two bendings determining the relevant radii interpolated towards the bending direction of the body for its adaptation the face of the tooth.
